Europäisches Patentamt

European Patent Office

Office européen des brevets

(19)

(11) EP 0 672 088 B1

(12) EUROPÄISCHE PATENTSCHRIFT

(45) Veröffentlichungstag und Bekanntmachung des Hinweises auf die Patenterteilung:
**01.09.1999 Patentblatt 1999/35**

(21) Anmeldenummer: **94926174.7**

(22) Anmeldetag: **10.08.1994**

(51) Int Cl.⁶: **C09C 1/42**, B41M 5/155

(86) Internationale Anmeldenummer:
**PCT/EP94/02656**

(87) Internationale Veröffentlichungsnummer:
**WO 95/05422 (23.02.1995 Gazette 1995/09)**

(54) **VERFAHREN ZUR HERSTELLUNG VON NEUTRALEN BIS ALKANISCHEN FARBENTWICKLERPIGMENTEN**

PROCESS FOR PRODUCING NEUTRAL TO ALKALINE DYE COUPLING DEVELOPER PIGMENTS

PROCEDE DE PRODUCTION DE PIGMENTS NEUTRES A ALCALINS DE REVELATEURS CHROMOGENES

(84) Benannte Vertragsstaaten:
**BE DE ES FR GB**

(30) Priorität: **12.08.1993 DE 4327158**

(43) Veröffentlichungstag der Anmeldung:
**20.09.1995 Patentblatt 1995/38**

(73) Patentinhaber: **SÜD-CHEMIE AG**
**80333 München (DE)**

(72) Erfinder:
• **HÄHN, Reinhard**
  **D-84186 Vilsheim (DE)**
• **RUF, Friedrich**
  **D-84184 Ast (DE)**

(74) Vertreter: **Reitzner, Bruno, Dr. et al**
**Patentanwälte Dipl.-Ing. R. Splanemann**
**Dr. B. Reitzner, Dipl.-Ing. K. Baronetzky**
**Tal 13**
**80331 München (DE)**

(56) Entgegenhaltungen:
**EP-A- 0 000 130       EP-A- 0 044 645**
**EP-A- 0 111 564       FR-A- 2 203 317**
**GB-A- 2 051 847       US-A- 4 053 324**

**Beschreibung**

Die Erfindung betrifft ein Verfahren zur Herstellung von neutralen bis alkalischen Farbentwicklerpigmenten zum Einsatz in kohlefreien Durchschreibepapieren.

Kohlefreie Selbstdurchschreibepapiere oder Reaktionsdurchschreibepapiere sind seit den frühen 50er Jahren bekannt. Sie kommen heute in großen Mengen in Bank- und Frachtformularsätzen, Lieferscheinen, Rechnungen usw. zum Einsatz. Gewöhnlich bestehen sie aus zwei oder mehreren aufeinanderliegenden Papierblättern, wobei das jeweils obere auf der Rückseite eine Farbgeberschicht (CB = coated back), das jeweils untere auf der Vorderseite eine Farbnehmerschicht (CF = coated front) aufweist. Hauptbestandteil der Farbgeberschicht sind dichtwandige Mikrokapseln aus Gelatine, Polyurethan, Melamin-Formaldehyd und ähnlichen Substanzen, die Lösungen von Farbstoffen in der sogenannten Leukoform enthalten. Diese nur schwach gefärbten Farbstoffvorläufer, überwiegend aus der Klasse der Di- oder Triphenylmethane, der Thiazine, der Spiropyrane oder der Fluorane, wirken als Elektronendonatoren (Lewis-Basen) und können mit Elektronenakzeptoren (Lewis-Säuren) in einer chemischen Reaktion in die Farbstofform überführt werden. Derartige Lewis-Säuren befinden sich in der Farbnehmerschicht in Form von sauren Phenolharzen, Zinksalicylaten oder sauer aktivierten Tonmineralien, z.B. sauer aktivierten smektitischen Schichtsilicaten. Werden nun beim Beschreiben eines Selbstdurchschreibesatzes durch den Schreiberdruck die Wände der betroffenen Mikrokapseln zerstört, wird der Kapselinhalt - die Farbstofflösung - freigesetzt und auf der lewissauren Nehmerschicht entwickelt, wobei eine Kopie entsteht.

Besonders geeignete Farbentwicklerpigmente lassen sich durch saure Aktivierung von Tonmineralien, wie Attapulgiten oder vorzugsweise smektitischen Schichtsilicaten, wie Bentoniten, herstellen.

Bevorzugt geht man von Calciumbentonit aus, also einem Schichtsilicat, dessen negative Schichtladungen durch Calciumionen auf Zwischenschichtplätzen kompensiert werden. Beim Aktivierungsprozeß, der durch Kochung mit Mineralsäuren, gewöhnlich Salzsäure oder Schwefelsäure, erfolgt, wird der Bentonit chemisch verändert: zum ersten wird das interlamellar gebundene $Ca^{2+}$ in einem Ionenaustauschschritt durch 2 $H^+$ ersetzt, zum zweiten wird die Schichtlamelle von den Kanten her angegriffen und die zentralen, oktaedrisch koordinierten $Al^{3+}$, $Fe^{2+}$, $Fe^{3+}$ und/oder $Mg^{2+}$-Ionen je nach Aktivierbedingungen mehr oder weniger aufgelöst und ausgewaschen. Bei fortschreitender Reaktion werden diese mehrwertigen Kationen teilweise wieder auf oder zwischen den negativ geladenen Schichten gebunden. Das Produkt kann somit als $H^+/Al^{3+}/Fe^{3+}/Mg^{2+}/Ca^{2+}$-Bentonit mit an den Kanten gebundener voluminöser, amorpher Kieselsäure beschrieben werden. Es zeichnet sich aus durch sehr hohe spezifische Oberflächen von etwa 300 $m^2/g$ (gemessen nach der BET-Methode), ein hohes Adsorptionsvermögen und Porenvolumen sowie durch die Anwesenheit von vielen sauren Zentren (Brönstedt- und Lewissäuren), an denen die Entwicklung der Farbstoffe katalytisch abläuft.

Der hochoberflächige, sauer aktivierte Bentonit, dessen Schichtstruktur (Röntgenbeugungsspektrum) im wesentlichen noch intakt ist, besitzt als Schichtsilicat eine ausgeprägte Blättchenstruktur mit sehr hohem Shapefaktor von > 30: 1. Dies bedingt in wäßrigen Slurries und Streichfarben im Vergleich zu "normalen" Streichpigmenten, wie Calciumcarbonat oder Kaolin, ein ungünstiges Fließverhalten, gekennzeichnet durch hohe Strukturviskositäten und Thixotropie bereits bei mittleren Feststoffgehalten von etwa 40 %. Aus den genannten Gründen ist es dringend erforderlich, sauer aktivierte Bentonite bei pH-Werten von etwa 7 - 10 zu dispergieren, aufzubereiten und zu streichen, da hier das Viskositätsminimum dieser Pigmente vorliegt. Die pH-Werteinstellung erfolgt wie üblich durch Zudosierung von Natronlauge. Allerdings treten bei der Dispergierung oft Probleme auf, da ein stark saures Pigment in einem alkalischen Medium verteilt werden muß; es kommt zu pH-Schocks, die sich in Agglomeratbildung und Eindickung äußern.

Es kann somit mit diesen Aktivpigmenten auch bei optimaler Streichfarbenaufbereitung, pH-Wertführung und Einsatz von Dispergiermitteln gewöhnlich ein Streichfarbenfeststoffgehalt von etwa 45 % nicht überschritten werden. Dies hat negative Auswirkungen auf die Trocknerkapazität und die Laufgeschwindigkeit der Streichmaschine.

Aus der DE-B 2 701 056 ist ein Sensibilisierungspigment für Farbreaktions-Aufzeichnungsmaterialien bekannt, das durch Ionenaustausch mit Lithium an einem dioctaedrischen Montmorillonit, anschließende Wärmebehandlung bis zum irreversiblen Kollabieren der Montmorillonitstruktur und Vermahlen zu einer Teilchengröße unter 15 μm erhältlich ist. Durch die Wärmebehandlung, die bei etwa 160 bis 300 °C durchgeführt wird, wird die Schichtstruktur des Montmorillonits zerstört. Dies macht sich in einer Veränderung des Röntgenbeugungsspektrums bemerkbar, indem sich der planare Grundabstand des Montmorillonits von 12 bis 15 Å auf etwa 8,9 bis 10,2 Å vermindert.

Aus der EP-B-0 044 645 ist ein Farbentwickler für druckempfindliche Kopierpapiere bekannt, der ausgehend von einem Tonmineral mit einer Schichtstruktur aus regelmäßigen Kieselsäure-Tetraedern, durch Säurebehandlung erhalten worden ist und der ein Elektronenbeugungsmuster aufweist, das Kristallen einer Schichtstruktur aus regelmäßigen Kieselsäuretetraedern zuschreibbar ist, der aber bei der Röntgenbeugungsanalyse im wesentlichen kein Beugungsbild zeigt, das den Kristallen dieser Schichtstruktur zuschreibbar ist, und der als Elementarbestandteile neben Sauerstoff Silicium und Magnesium und/oder Aluminium enthält. Bei der Säurebehandlung wird der $SiO_2$-Gehalt auf etwa 82 bis 96,5 Gew.-% angehoben, d.h. die Schichtstruktur des Montmorillonits wird weitgehend zerstört.

Ein ähnlicher Farbentwickler für druckempfindliche Kopierpapiere ist in der JP-A-58-217389 (Patents Abstracts of Japan, M-286, 1984, Vol. 8, No. 69) beschrieben. Zur Herstellung dieses Farbentwicklers geht man ebenfalls von säurebehandelten Tonmineralien, wie Montmorilloniten, mit einem $SiO_2$-Gehalt von 82 bis 96,5 Gew.-% aus, in deren Röntgenbeugungsspektren keine regelmäßigen Kieselsäuretetraeder mehr feststellbar sind. Diese Substanzen werden dann mit Mg- und Al-Verbindungen umgesetzt.

Aus der US-A-4 830 843 ist ein Magnesiumphyllosilicat bekannt, das als Farbentwickler für druckempfindliche Aufzeichnungspapiere verwendet werden kann. Dieses Phyllosilicat wird durch Umsetzung einer aktiven Kieselsäure oder einer aktiven Alumino-Kieselsäure mit Magnesiumoxid oder -hydroxid unter hydrothermalen Bedingungen hergestellt. Wird von einer aktiven Alumino-Kieselsäure, z.B. einem säurebehandelten Montmorillonit, ausgegangen, so wird die Säurebehandlung so weit geführt, daß das gesamte Aluminium herausgelöst wird, so daß dieses in der Formel des als Endprodukt erhaltenen Magnesiumsilicats nicht mehr erscheint.

Aus der EP-A-0 076 342 ist ein Farbentwickler für kohlefreies Kopierpapier bekannt, das eine trockene physikalische Mischung von teilchenförmigem aktiviertem Ton mit Natriumsilicat und gegebenenfalls einem oder mehreren Dispergiermitteln darstellt. Es liegt hier also kein Reaktionsprodukt vor.

Aus der DE-C-2 727 053 ist eine adsorptiv wirkendes silicatisches Mittel zur Bindung von Erdalkali-Ionen bekannt, das durch trockenes oder nasses Vermischen eines durch Säureaktivierung eines Minerales aus der Monotmorillonit-Beidelit-Reihe erhaltenen Materials mit Alkalihydroxid, -carbonat, -phosphat oder -borat erhalten worden ist. Hierbei werden die H-Ionen auf d er Oberfläche und zwischen den Schichten des säureaktivierten Materials ausgetauscht. Das Mittel wird in erster Linie als kombiniertes Adsorptions- und Wasserenthärtungsmittel verwendet.

Aus der DE-B-1 809 778 ist ein Farbbildner für druckempfindliches Wiedergabepapier und ein Verfahren zu dessen Herstellung bekannt, bei dem ein säurebehandeltes dioktaedrisches Montmorillonit-Tonmineral mit natürlichen dioktaedrischen Montmorillonit-Tonmineralen gemischt wird, um ein bestimmtes sekundäres Farbentwicklungsvermögen zu erzeugen. Zur weiteren Verbesserung der Farbentwicklungswirkung können alkalische Substanzen, wie Natriumsilicat, Natriumpyrophosphat oder Erdalkalihydroxide, z.B. gelöschter Kalk, zugesetzt werden. Ein derartiger Zusatz erfolgt jedoch nur in Form einer physikalischen Mischung.

Aus der EP-B-0 144 472 ist eine ähnliche Farbentwicklermasse für druckempfindliche Aufzeichnungsblätter bekannt, die einen Farbentwickler auf der Basis eines Tonminerals mit einer Schichtstruktur mit bestimmten Eigenschaften, eine Metallverbindung in Form der Oxide und/oder Hydroxide von Calcium, Magnesium und Zink und gegebenenfalls einen weiteren Farbentwickler mit einem $SiO_2$-Gehalt von nicht mehr 80 % enthält. Auch in diesem Fall erfolgt nur eine physikalische Mischung des sauren Tonminerals mit der Calcium-, Magnesium- und Zinkverbindung.

Aus der FR-A-2 203 317 ist ein Farbentwickler für kohlefreies Durchschreibepapier bekannt, der durch Säurereaktivierung von Tonen, wie Saponit oder Hectorit, erhalten wird.

Aus der EP-A-0 111 564 ist ein Farbentwickler für druckempfindliche Kopierpapiere bekannt, der durch Säurebehandlung von Tonmineralen erhalten wird, wobei der $SiO_2$-Gehalt auf 82 bis 96,5% angehoben wird. Das erhaltene säureaktivierte Mineral wird in einem wäßrigen Medium mit einer löslichen Magnesium- und/oder Aluminiumverbindung in Berührung gebracht, wobei Magnesium- und/oder Aluminiumionen unter Austausch der Hydroniumionen in die Schichtstruktur eingebaut werden.

Aus der US-A-4 053 324 ist die Herstellung von Montmorillonit-Pigmenten mit verminderter Ladung bekannt, wobei die Zwischenschicht-Kationen durch Behandlung mit Säure durch Hydroniumionen ausgetauscht werden. Die Hydroniumionen werden dann durch Lithiumionen ausgetauscht, die durch die Tetraederschicht in die Oktaederschicht eindringen und die Schichtladung herabsetzen.

Aus der GB-A-2 051 847 ist ein Verfahren zur Herstellung von Farbentwicklermaterial bekannt, wobei ein dioktaedrischer Montmorillonit in einem wäßrigen Medium mit Säure gewaschen wird, worauf der pH-Wert der Dispersion durch Zusatz einer alkalischen Kaliumverbindung auf etwa 7 bis 11 eingestellt wird.

Es wurde nun überraschenderweise gefunden, daß die Viskosität und Thixotropie von sauer aktivierten smektitischen Schichtsilicaten deutlich verbessert werden kann, wenn man das sauer aktivierte Schichtsilicat ohne zwischenzeitliche Trocknung unter bestimmten Bedingungen mit den basisch reagierenden Chemikalien chemisch umsetzt.

Die Erfindung betrifft also ein Verfahren zur Herstellung von neutralen bis alkalischen Farbentwicklerpigmenten zum Einsatz in kohlefreien Durchschreibepapieren, aus einem sauer aktivierten smektitischen Schichtsilicat und basisch reagierenden Chemikalien; dieses Verfahren ist dadurch gekennzeichnet, daß man das sauer aktivierte Schichtsilicat, dessen Schichtstuktur im wesentlichen noch intakt ist, ohne zwischenzeitliche Trocknung mit den basisch reagierenden Chemikalien bis zum partiellen oder vollständigen Abbau der an den Ecken und Kanten der Schichtsilicat-Kristallite gebildeten amorphen Kieselsäure ohne wesentlichen Rücktausch der zwischen den Schichten des Schichtsilicats eingebauten Hydroniumionen durch Alkali- oder Erdalkaliionen umsetzt.

Die saure Aktivierung kann in an sich bekannter Weise durchgeführt werden, wobei man vorzugsweise Mineralsäuren, wie Salzsäure oder Schwefelsäure, verwendet. Die Säurekonzentration beträgt im allgemeinen bei Salzsäure 25 bis 40%, bei Schwefelsäure 55 bis 70%, die Temperatur etwa 90 bis 98°C und die Behandlungsdauer etwa 7 bis 15 Stunden. Wesentlich ist, daß die saure Aktivierung nicht soweit geführt wird, daß nur noch amorphe Kieselsäure vorliegt, d.h., daß die Schichtstruktur im wesentlichen noch intakt ist. Das Schichtsilicat kann entweder unmittelbar nach der Abtrennung von der Säure oder aber auch später mit den basisch reagierenden Chemikalien umgesetzt werden, wobei im zweiten Fall dafür Sorge getragen werden muß, daß das sauer aktivierte Schichtsilicat, das gewöhnlich als feuchter Filterkuchen anfällt, feucht bleibt. Der Wassergehalt soll vorzugsweise nicht unter 20% sinken. Man nimmt an, daß bei einer Trocknung des sauer aktivierten Schichtsilicats die an den Ecken und Kanten der Schichtsilicat-Kristallite gebildete amorphe Kieselsäure rekristallisiert oder auf andere Weise inaktiviert wird, so daß sie nicht mehr so leicht von den basischen Chemikalien an-gegriffen werden kann und die Reaktion kaum oder nur unvollständig stattfindet.

Vorzugsweise führt man die Umsetzung des sauer aktivierten smektitischen Schichtsilicats mit den basisch reagierenden Chemikalien bei einem Wassergehalt von etwa 75 bis 15 Gew.-%, insbesondere von 70 - 20 Gew.-%, durch.

Man geht hierbei vorzugsweise von einem sauer aktivierten smektitischen Schichtsilicat mit einer spezifischen Oberfläche von etwa 280 bis 350 m$^2$/g und einem Gehalt an amorpher Kieselsäure von 20 bis 45 Gew.-% (bezogen auf das Gesamtmaterial) aus. Die spezifische Oberfläche wird nach der im J.Am.Soc.<u>60</u>, 309 (1938) von S. Brunauer, P. H. Emmet und E.Teller beschriebenen, sogenannten BET-Methode bei der Temperatur des flüssigen Stickstoffs bestimmt (Einpunktmethode nach DIN 66 131 und 66 132).

Der Gehalt an amorpher Kieselsäure wird wie folgt bestimmt:

Ein aliquoter Anteil des zu prüfenden Pigments wird in einem V2A-Gefäß mit der doppelten Menge an wasserfreier Soda versetzt und in 3%iger wässriger Suspension 10 Minuten unter Rückfluß gekocht. Nach dem Abfiltrieren der Mutterlauge wird die Prozedur noch zweimal wiederholt. Aus den vereinigten Mutterlaugen wird ein aliquoter Anteil entnommen, und die darin enthaltene Natriumsilicatlösung wird nach dem Ansäuern mit Schwefelsäure mittels einer 10%igen Natriummolybdatlösung gelb angefärbt. Die Farbintensität,bestimmt am Beckman-Spektralphotometer bei 400nm, ergibt über eine Eichkurve die Konzentration an Natriumsilicat.

Der Gehalt des sauer aktivierten Schichtsilicats an amorpher Kieselsäure beträgt vorzugsweise nicht mehr als 50 Gew.-%. Im Röntgenbeugungsdiagramm ist die urspüngliche Schichtstruktur des Montmorillonits noch erkennbar.

Als sauer aktiviertes smektitisches Schichtsilicat wird vorzugsweise sauer aktivierter Bentonit verwendet.

Als basisch reagierende Chemikalien verwendet man vorzugsweise ein oder mehrere Hydroxide, Oxide, Hydrogencarbonate, Carbonate, Silicate, Aluminate, Aluminiumsilicate und/oder Borate von Alkali- und/oder Erdalkalimetallen. Von der Verbindungen der Alkalimetalle werden die entsprechenden Natrium- und/oder Kaliumverbindungen bevorzugt. Von den Verbindungen der Erdalkalimetalle werden die entsprechenden Calciumverbindungen bevorzugt.

Durch die Umsetzung mit den basisch reagierenden Chemikalien erfolgt eine Erhöhung des pH-Wertes des Pigments von ursprünglich etwa 2 bis 4 auf etwa 6 bis 9,5 , vorzugsweise auf 6,5 bis 8. Der pH-Wert wird auf folgende Weise bestimmt:

10 g des Pigments werden in 100 ml destilliertem Wasser kurz zum Kochen gebracht und anschließend heiß über ein Faltenfilter abfiltriert; der pH-Wert wird nach dem Abkühlen auf Raumtemperatur mittels einer Glaselektrode bestimmt.

Durch die Umsetzung mit den basisch reagierenden Substanzen wird ferner die spezifische Oberfläche des sauer aktivierten smektitischen Schichtsilicats herabgesetzt. So wird beispielsweise die spezifische Oberfläche eines säureaktivierten Bentonits von ursprünglich > 280 m$^2$/g (gemessen nach der BET-Methode) auf Werte zwischen etwa 200 und 270 m$^2$/g reduziert. Gleichzeitig werden durch die Umsetzung die Viskosität und die Thixotropie von Suspensionen des Farbentwicklerpigments drastisch reduziert. Die Dispergierbarkeit des Farbentwicklerpigments in wäßrigen Medien verläuft nach der erfindungsgemäßen Behandlung mit den basisch reagierenden Chemikalien völlig problemlos, und die Reaktivität des Aktivpigments wird durch die Umsetzung verbessert.

Gegenstand der Erfindung ist ferner ein Farbentwicklerpigment, das nach dem vorstehend beschriebenen Verfahren erhältlich ist und das dadurch gekennzeichnet ist, daß seine spezifische Oberfläche um mindestens 20 m$^2$/g niedriger ist als die des als Ausgangsmaterial verwendeten, sauer aktivierten smektitischen Schichtsilicats. Nach der erfindungsgemäßen Behandlung ist der Gehalt des Farbentwicklerpigments an Zwischengitter-Hydroniumionen um nicht mehr als etwa 10% geringer als der Gehalt an Zwischengitter-Hydroniumionen des als Ausgangsmaterials verwendeten, sauer aktivierten smektitischen Schichtsilicats. Der pH-Wert des Farbentwicklerpigments liegt in 10 %-iger wäßriger Suspension zwischen 6 und 9,5, vorzugsweise zwischen 6,5 und 8.

Gegenstand der Erfindung ist ferner eine Farbentwicklerpigment-Suspension, welche das vorstehend beschriebene Farbentwicklerpigment in einer Konzentration von 30 bis 50 Gew.-%, vorzugsweise von etwa 38 bis 48 Gew.-%, insbesondere von 45 Gew.-%, enthält.

Farbentwicklerpigment-Suspensionen mit derartig hohen Konzentrationen konnten bisher noch nicht erhalten werden bzw. hatten eine zu hohe Viskosität und Thixotropie, so daß ihre Verwendung als Streichpigmente mit Schwierigkeiten verbunden war. Außerdem neigten die bekannten Suspensionen zum Eindicken und zu Agglomeratbildungen.

Die erfindungsgemäße Farbentwicklerpigment-Suspension enthält vorzugsweise ein Dispergiermittel in Mengen von etwa 0,1 bis 0,5 Gew.-%; ihr pH-Wert ist auf 7 bis 9,5 eingestellt. Als Dispergiermittel verwendet man beispielsweise Polyphosphate, Polyacrylate, Polycarbonsäuresalze usw..

Gegenstand der Erfindung ist ferner ein Farbentwicklerblatt (CF) oder ein Self-Contained Blatt (SC) für Durchschreibepapiere, die ein Farbentwicklerpigment, wie es vorstehend definiert ist, enthält.

Die Erfindung ist durch die nachstehenden Beispiele in nicht einschränkender Weise erläutert.

Beispiel 1

100 Gewichtsteile bayerischer Calciumbentonit wurden in an sich bekannter Weise mit 40 Gewichtsteilen einer 30 %-igen Salzsäure (otro auf Bentonit) 10 Stunden bei 95° C aktiviert. Der sauer aktivierte Bentonit wurde unter Anlegen eines leichten Vakuums abfiltriert und mit destilliertem Wasser chloridfrei gewaschen. Der Filterkuchen (Feststoffgehalt 25 Gew.-%) wurde auf einen Wassergehalt von etwa 30 Gew.-% gebracht. An einer feuchten Probe wurde der Gehalt an amorpher Kieselsäure zu 35 Gew.-% bestimmt. Das Ionenumtauschvermögen für $H^+$ der feuchten Probe betrug 27 mVal/100 g. Zur Bestimmung der spezifischen Oberfläche wurde eine weitere Probe auf einen Wassergehalt von 0% getrocknet, da die Oberflächenbestimnung mit dem feuchten Produkt nicht möglich ist. Die spezifische Oberfläche betrug 305 $m^2$/g.

Das feuchte Produkt wurde in einem Doppelwellenkneter überführt. Es wurden 2,0 Gew.-% NaOH in Form einer 10 %-igen Lösung über das sauer aktivierte Material gesprüht; das Gemisch wurde etwa 2 Minuten geknetet. Anschließend wurde das Produkt schonend bei 60° C auf einen Wassergehalt von 5 Gew.-% getrocknet und in einer Schlagrotormühle auf die gewünschte Kornfeinheit vermahlen. Der pH-Wert einer 10 %-igen wäßrigen Suspension des Pigments betrug 7,1. Das Ionenumtauschvermögen für H+ der Probe betrug 25 mVal/100 g, hatte sich aber gegenüber dem Ionenumtauschvermögen des noch nicht mit NaOH behandelten, sauer aktivierten Bentonits praktisch nicht verändert.

Die relevanten Daten des erhaltenen Aktivpigments sind in der Tabelle zusammengefaßt. Sie wurden, soweit nicht bereits angegeben, nach folgenden Verfahren ermittelt:

- Körnungsanalyse: es wurde der Sedigraph 5000 D verwendet, wobei die Aufbereitung der Probe (6 - 7 g) durch 15 minütiges Erhitzen unter Rückfluß in 90 ml einer 0,002 molaren $Na_4P_2O_7 \cdot 10H_2O$-Lösung erfolgte. Aufgezeichnet wurde der Rückstand bei 10 µm (R 10 µm) und der $d_k$-Wert, d.h. der mittlere Korndurchmesser.
- Viskosität: zur Ermittlung der Viskosität wurden die Pigmente in eine standardisierte Streichfarbe mit folgender Rezeptur eingearbeitet:

| Pigment | 100 Gew.-Tle |
|---|---|
| Bindemittel (DOW Latex G75) | 11 Gew.-Tle |
| pH-Wert | 9,5 |
| Feststoff | 40 Gew.-% |

Hierbei wurde das Anmachwasser vorgelegt und mit Natronlauge auf einen pH-Wert von 9 - 10 eingestellt. Der Eintrag des Pigments erfolgte bei einer konstanten Rührerdrehzahl von 700 U/min, wobei der pH-Wert durch parallele NaOH-Dosierung stets bei 9 - 10 gehalten wurde. Nach Beendigung des Pigmenteintrages wurde unter reduzierter Rührerdrehzahl das Bindemittel zugesetzt und anschließend die Viskosität im Brookfield-Viskosimeter bei 10 und 100 U/min ermittelt.

- Farbkontraste: die standardisierte Streichfarbe wurde mittels eines Handrakels bie 6 $g/m^2$ auf holzfreies Streichrohpapier gestrichen, getrocknet und bei 50 % rel. Luftfeuchte äquilibriert. Mit diesem CF-Blatt und einem auf dem Markt erhältlichen blauschreibenden CB-Blatt wurde an einem Laborkalander eine Kopie erzeugt und am Ry-Filter eines Elrepho-Gerätes (Fa. Zeiss/Datacolor) der Farbkontrast als Differenz des Ry-Wertes von CF-Strich und Kopie ermittelt:

$$Kontrast = Ry/_{CF} - Ry/_{Kopie}$$

Beispiel 2 (Vergleich)

Der chloridfei gewaschene Filterkuchen des nach Beispiel 1 aktivierten Bentonits wurde ohne weitere Zusätze schonend bei 80° C auf einen Wassergehalt von 5 Gew.-% getrocknet und auf die gewünschte Kornfeinheit vermahlen.

Das Produkt mit einem pH-Wert von 3,2 entspricht dem Stand der Technik. Die Ergebnisse der Abprüfung sind in der Tabelle verzeichnet.

Beispiel 3

Der chloridfreie gewaschene Filterkuchen nach Beispiel 1 (Wassergehalt 68 %) wurde in einen Dopelwellenkneter überführt, mit 3,0 Gew.-% Soda überstäubt und etwa 2 min. geknetet. Das Produkt wurde auf einen Wassergehalt von 4 Gew.-% getrocknet und vermahlen. Der pH-Wert betrug 7,3. Die Ergebnisse der Abprüfung sind in der Tabelle verzeichnet.

Beispiel 4

Der Versuch erfolgte analog zu Beispiel 3, nur daß anstelle von Soda 4,8 Gew.-% Natriumhydrogencarbonat eingesetzt wurden. Der resultierende pH-Wert des Pigmentes betrug 7,0. Die Ergebnisse finden sich in der Tabelle.

Beispiel 5

Der Versuch erfolgte analog zu Beispiel 3, nur daß anstelle der Soda 4,0 % Calciumcarbonat zum Einsatz kamen. Es wurde ein Pigment mit einem pH-Wert von 7,2 (10 %-ige Suspension) erhalten. Im Röntgendiffraktometer ließ sich kein $CaCO_3$ mehr nachweisen. Die Ergebnisse finden sich in der Tabelle.

Beispiel 6 (Vergleich)

Es wurde die saure Referenzprobe des Beispiels 2 verwendet. Das Pigment wurde bei einem Wassergehalt von 5 Gew.-% mit 4,0 Gew.-% Calciumcarbonat gemischt und untersucht. Der pH-Wert einer 10 %-igen Suspension betrug 6,6. Im Röntgendiffraktometer ist eindeutig $CaCO_3$ zu identifizieren. Die Ergebnisse finden sich in der Tabelle.

Beispiel 7

Es wurde analog zu Beispiel 1 gearbeitet, nur wurden 1,5 Gew.-% NaOH mit dem sauer aktivierten Bentonit umgesetzt. Der pH-Wert einer 10 %-igen Suspension des Produktes betrug 6,5. Die Ergebnisse finden sich in der Tabelle.

Beispiel 8

Es wurde analog zu Beispiel 1 gearbeitet,nur wurden 2,3 Gew.-% NaOH mit dem sauer aktivierten Bentonit umgesetzt.Der pH-Wert einer 10 %-igen Suspension des Produktes betrug 8,5. Die Ergebnisse finden sich in der Tabelle.

Beispiel 9

Es wurde analog zu Beispiel 1 gearbeitet, nur wurden 2,7 Gew.-% NaOH mit dem sauer aktivierten Bentonit umgesetzt. Der pH-Wert einer 10 %-igen Suspension des Produktes betrug 9,0. Die Ergeb-nisse finden sich in der Tabelle.

Beispiel 10

Es wurde analog zu Beispiel 3 gearbeitet, nur wurden auf den Filterkuchen des sauer aktivierten Bentonits 3,0 Gew.-% einer 10 %-igen Natriumaluminatlösung in Wasser aufgesprüht. Der pH-Wert einer 10 %-igen Suspension des aufgearbeiteten Pigments lag bei 6,9. Die Ergebnisse finden sich in der Tabelle.

Die Tabelle zeigt die im Vergleich zum Pigment nach Beispiel 2 (Vergleich), das den Stand der Technik repräsentiert, deutlich verbesserte Viskositätswerte der erfindungsgemäßen neutralen oder alkalischen Farbentwicklerpigmente nach dem Beispiel 1,3 bis 5 und 7 bis 10. Neben der Viskosität wurde auch die Thixotropie der Produkte deutlich abgebaut, so daß die erfindungsgemäßen Pigmentsuspensionen einen besseren und ruhigeren Lauf auf der Streichmaschine hatten. Man erkennt aus der Tabelle, daß die Viskositätsverringerung mit einem Abbau der spezifischen Oberfläche einhergeht, der durch die Reaktion der Alkalien mit der an die Ecken und Kanten gebundenen, amorphen Kieselsäure erklärt werden kann.

Die Beispiele 1 und 7 bis 9 belegen den Einfluß der Alkalidosierung auf die Viskositätsreduktion. Ein Vergleich der Beispiele 5 und 6 beweist die Notwendigkeit der chemischen Umsetzung des sauer aktivierten Bentonits mit der basischen Verbindung, die durch das Verschwinden der $CaCO_3$-Peaks im Röntgenbeugungsdiagramm dokumentiert wird. Eine physikalische Mischung (Vergleichsbeispiel 6 nach DE-B-1 809 778 bzw. EP-B-0 144 472) hat nahezu keinen Effekt auf die Viskosität des Pigments.

Weiterhin zeigt die Tabelle, daß die Farbreaktivität der erfindungsgemäßen Produkte gegenüber dem Stand der Technik verbessert ist, so daß der in der Praxis übliche Verschnitt mit Extenderpigmenten, wie $CaCO_3$ oder Kaolin, problemlos möglich ist.

Tabelle

| Beispiel | Alkalieinsatz | | pH-Wert | spez. Oberfläche | Körnung | | Viskosität | | Farbkontrast |
|---|---|---|---|---|---|---|---|---|---|
| | Art | Menge % | Pigment | $m^2/g$ | R10 μm % | $d_k$ μm | 10 rpm | 100 rpm | % |
| 1 | NaOH | 2,0 | 7,1 | 250 | 4 | 2,55 | 410 | 290 | 37,5 |
| 2 | – | – | 3,1 | 308 | 5 | 2,5 | 1800 | 780 | 35 |
| 3 | $Na_2CO_3$ | 3,0 | 7,3 | 248 | 5 | 2,7 | 400 | 270 | 39 |
| 4 | $NaHCO_3$ | 4,8 | 7,0 | 256 | 5 | 2,7 | 500 | 300 | 38 |
| 5 | $CaCO_3$ | 4,0 | 7,2 | 252 | 4 | 2,6 | 395 | 290 | 39,5 |
| 6 | $CaCO_3$ | 4,0 | 6,6 | 301 | 4 | 2,6 | 1780 | 785 | 38,5 |
| 7 | NaOH | 1,5 | 6,5 | 280 | 3 | 2,3 | 1240 | 510 | 37,5 |
| 8 | NaOH | 2,3 | 8,5 | 237 | 4 | 2,65 | 325 | 215 | 40 |
| 9 | NaOH | 2,7 | 9,0 | 202 | 3 | 2,35 | 203 | 155 | 39 |
| 10 | $NaAlO_2$ | 3,0 | 6,9 | 253 | 4 | 2,5 | 380 | 280 | 40,5 |

EP 0 672 088 B1

**Patentansprüche**

1. Verfahren zur Herstellung von neutralen bis alkalischen Farbentwicklerpigmenten zum Einsatz in kohlefreien Durchschreibepapieren, aus einem sauer aktivierten smektitischen Schichtsilicat und basisch reagierenden Chemikalien, dadurch gekennzeichnet, daß man das sauer aktivierte Schichtsilicat, dessen Schichtstruktur im wesentlichen noch intakt ist, ohne zwischenzeitliche Trocknung mit den basisch reagierenden Chemikalien bis zum partiellen oder vollständigen Abbau der an den Ecken und Kanten der Schichtsilicat-Kristallite gebildeten amorphen Kieselsäure ohne wesentlichen Rücktausch der zwischen den Schichten des Schichtsilicats eingebauten Hydroniumionen durch Alkali- oder Erdalkaliionen umsetzt.

2. Verfahren nach Anspruch 1, dadurch gekennzeichnet, daß man die Umsetzung des sauer aktivierten smektitischen Schichtsilicats mit den basisch reagierenden Chemikalien bei einem Wassergehalt von 75 bis 15 Gew.-%, vorzugsweise von 70 - 20 Gew.-%, durchführt.

3. Verfahren nach Anspruch 1 oder 2, dadurch gekennzeichnet, daß man ein sauer aktiviertes smektitisches Schichtsilicat mit einer spezifischen Oberfläche von etwa 280 bis 350 $m^2$/g und einem Gehalt an amorpher Kieselsäure von 20 bis 45 Gew.-% (bezogen auf das Gesamtmaterial) als Ausgangsmaterial verwendet.

4. Verfahren nach einem der Ansprüche 1 bis 3, dadurch gekennzeichnet, daß man als sauer aktiviertes smektitisches Schichtsilicat sauer aktivierten Bentonit verwendet.

5. Verfahren nach einem der Ansprüche 1 bis 4, dadurch gekennzeichnet, daß man als basisch reagierende Chemikalien eines oder mehrere der Hydroxide, Oxide, Hydrogencarbonate, Carbonate, Silicate, Aluminate, Aluminiumsilicate und/oder Borate von Alkali- und/oder Erdalkalimetallen verwendet.

6. Farbentwicklerpigment, erhältlich nach einem der Ansprüche 1 bis 5, dadurch gekennzeichnet, daß seine spezifische Oberfläche um mindestens 20 $m^2$/g niedriger ist als die des als Ausgangsmaterial verwendeten, sauer aktivierten smektitischen Schichtsilicats.

7. Farbentwicklerpigment nach Anspruch 6, dadurch gekennzeichnet, daß sein Gehalt an Zwischengitter-Hydroniumionen um nicht mehr als etwa 10% geringer ist als der Gehalt an Zwischengitter-Hydroniumionen des als Ausgangsmaterial verwendeten sauer aktivierten smektitischen Schichtsilicats.

8. Farbentwicklerpigment nach Anspruch 6 oder 7, dadurch gekennzeichnet, daß sein pH-Wert in 10%iger wäßriger Suspension zwischen 6 und 9,5, vorzugsweise zwischen 6,5 und 8, liegt.

9. Farbentwicklerpigment-Suspension, enthaltend ein Farbentwicklerpigment nach einem der Ansprüche 6 bis 8, in einer Konzentration von 30 bis 50 Gew.-%, vorzugsweise von etwa 38 bis 48 Gew.-%, insbesondere von 45 Gew.-%.

10. Farbentwicklerpigment-Suspension nach Anspruch 9, dadurch gekennzeichnet, daß sie ein Dispergiermittel in Mengen von etwa 0,1 bis 0,5 Gew.-% enthält und daß ihr pH-Wert auf 7 bis 9,5 eingestellt ist.

11. Farbentwicklerblatt (CF) oder Self-Contained Blatt (SC) für Durchschreibepapiere, enthaltend ein Farbentwicklerpigment nach einem der Ansprüche 6 bis 8.

**Claims**

1. A process for producing neutral to alkali colour developer pigments for use in carbon-free copying papers from an acid-activated smectitic layered silicate and basically reacting chemicals, characterised in that the acid-activated layered silicate with a layer structure which is essentially still intact is reacted without intermediate drying with the basically reacting chemicals up to partial or complete decomposition of the amorphous silicic acid formed at the corners and edges of the layered silicate crystallites without significant re-exchange of the hydronium ions incorporated between the layers of the layered silicate by alkali or alkaline earth ions.

2. A process according to Claim 1, characterised in that the reaction of the acid-activated smectitic layered silicate is carried out with the basically reacting chemicals at a water content of 75 to 15 % by weight, preferably 70-20 % by weight.

3. A process according to Claim 1 or 2, characterised in that an acid-activated smectitic layered silicate with a specific surface area of approximately 280 to 350 $m^2$/g and a content of amorphous silicic acid from 20 to 45 % by weight (relative to all the material) is used as the starting material.

4. A process according to any one of Claims 1 to 3, characterised in that acid-activated bentonite is used as the acid-activated smectitic layered silicate.

5. A process according to any one of Claims 1 to 4, characterised in that one or more of the hydroxides, oxides, hydrogen carbonates, carbonates, silicates, aluminates, aluminium silicates and/or borates of alkali and/or alkaline earth metals are used as the basically reacting chemicals.

6. A colour developer pigment which can be obtained according to any one of Claims 1 to 5, characterised in that its specific surface area is smaller by at least 20 $m^2$/g than that of the acid-activated smectitic layered silicate used as the starting material.

7. A colour developer pigment according to Claim 6, characterised in that its content of interlayer hydronium ions is less by no more than approximately 10 % than the content of interlayer hydronium ions of the acid-activated smectitic layered silicate used as the starting material.

8. A colour developer pigment according to Claim 6 or 7, characterised in that its pH value in a 10 % aqueous suspension is between 6 and 9.5, preferably between 6.5 and 8.

9. A colour developer pigment suspension containing a colour developer pigment according to one of Claims 6 to 8, in a concentration from 30 to 50 % by weight, preferably from approximately 38 to 48 % by weight, especially 45 % by weight.

10. A colour developer pigment suspension according to Claim 9, characterised in that it contains a dispersing agent in amounts of approximately 0.1 to 0.5 % by weight, and in that its pH value is adjusted to 7 to 9.5.

11. A colour developer sheet (CF) or self-contained sheet (SC) for copying papers containing a colour developer pigment according to any one of Claims 6 to 8.

## Revendications

1. Procédé pour préparer des pigments révélateurs chromogènes neutres à alcalins, pour utilisation dans des papiers autocopiants sans carbone, à partir d'un phyllosilicate smectitique activé par un acide et de composés chimiques à réaction basique, caractérisé en ce qu'on fait réagir le phyllosilicate activé par un acide, dont la structure lamellaire est encore essentiellement intacte, sans séchage intermédiaire, avec des composés à réaction basique jusqu'à la dégradation partielle ou complète de la silice amorphe formée au niveau des sommets et des arêtes des cristallites de phyllosilicate, essentiellement sans remplacement en retour, par des ions de métaux alcalins ou alcalino-terreux, des ions hydronium incorporés entre les couches du phyllosilicate.

2. Procédé selon la revendication 1, caractérisé en ce qu'on met en oeuvre la réaction du phyllosilicate smectitique activé par un acide avec les composés chimiques à réaction basique en présence d'une teneur en eau de 75 à 15 % en poids, de préférence de 70 à 20 % en poids.

3. Procédé selon la revendication 1 ou 2, caractérisé en ce qu'on utilise en tant que matière de départ un phyllosilicate smectitique activé par un acide ayant une aire spécifique d'environ 280 à 350 $m^2$/g et une teneur en silice amorphe de 20 à 45 % en poids (par rapport à la matière dans son ensemble).

4. Procédé selon l'une des revendications 1 à 3, caractérisé en ce qu'on utilise une bentonite activée par un acide en tant que phyllosilicate smectitique activé par un acide.

5. Procédé selon l'une des revendications 1 à 4, caractérisé en ce qu'on utilise en tant que composés chimiques à réaction basique un ou plusieurs des hydroxydes, oxydes, hydrogénocarbonates, carbonates, silicates, aluminates, aluminosilicates et/ou borates de métaux alcalins et/ou alcalino-terreux.

6.  Pigment révélateur chromogène pouvant être obtenu selon l'une des revendications 1 à 5, caractérisé en ce que son aire spécifique est d'au moins 20 m$^2$/g inférieure à celle du phyllosilicate smectitique activé par un acide, utilisé en tant que matière de départ.

7.  Pigment révélateur chromogène selon la revendication 6, caractérisé en ce que sa teneur en ions hydronium interstitiels est au plus d'environ 10 % inférieure à la teneur en ions hydronium interstitiels du phyllosilicate smectitique activé par un acide, utilisé en tant que matière de départ.

8.  Pigment révélateur chromogène selon la revendication 6 ou 7, caractérisé en ce que son pH en suspension aqueuse à 10 % est compris entre 6 et 9,5, et de préférence entre 6,5 et 8.

9.  Suspension d'un pigment révélateur chromogène contenant un pigment révélateur chromogène selon l'une des revendications 6 à 8, à une concentration de 30 à 50 % en poids, de préférence d'environ 38 à 48 % en poids, en particulier de 45 % en poids.

10. Suspension d'un pigment révélateur chromogène selon la revendication 9, caractérisée en ce qu'elle contient un dispersant en une quantité d'environ 0,1 à 0,5 % en poids, et que son pH est ajusté à une valeur de 7 à 9,5.

11. Feuille révélatrice chromogène (CF) ou feuille Self-Contained (SC) pour papiers autocopiants, contenant un pigment révélateur chromogène selon l'une des revendications 6 à 8.